# EUROPEAN PATENT APPLICATION

(11) **EP 4 357 418 A1**
(43) Date of publication of application: **24.04.2024**
(21) Application number: 22202144.6
(22) Date of filing: 18.10.2022
(51) Int. Cl.: C08L 69/00

(54) **POLYCARBONATE COMPOSITION**

(71) Applicant: Covestro Deutschland AG, 51373 Leverkusen (DE)
(72) Inventor: Wan, Shun, Shanghai, 200333 (CN); Guo, Vivian, Shanghai, 200233 (CN)
(74) Representative: Levpat

(57) **Abstract**

The present invention relates to a polycarbonate composition comprising the following components, relative to the total weight of the composition: A) 40-85 wt.% of an aromatic polycarbonate, B) 1-30 wt.% of acrylonitrile-butadiene-styrene, C) 8-15 wt.% of wollastonite, D) 1-3.5 wt.% of bisphenol-A bis(diphenyl phosphate), , and E) 2.5-6 wt.% of styrene-acrylonitrile-methacrylate. The present invention also relates to a shaped article made from the composition. The polycarbonate composition according to the present invention has a good combination of impact strength, heat resistance, and aesthetic appearance.

## Description

### TECHNICAL FIELD

The present invention relates to a polycarbonate (PC) composition. In particular, the present invention relates to a polycarbonate composition and a shaped article made from the same.

### BACKGROUND ART

The reinforced PC/ABS (Acrylonitrile-Butadiene-Styrene) compositions have long been used to make auto exterior functional or decorative parts. For this purpose, the compositions should have excellent mechanical properties, such as high resistance to impact and high stiffness, good aesthetic appearance and excellent processability.

In the art, there are a number of patents and applications where the use of wollastonite or other inorganic fillers in PC/ABS blends are disclosed.

Conventional fillers such as glass fibers, mica, glass flake, clay or talc fillers, if used in PC compositions, will adversely affect one or more of the above-mentioned desired properties of molded parts. For example, molded parts after coating has a low distinctness of image (DOI) (which is a measurement for the surface smoothness), is brittle, and has poor resistance to impact.

In order to improve the negative impact on the properties, great efforts have been made to develop new PC compositions.

U.S. Pat. No. 5,0991,461 discloses a PC/ABS composition comprising a type of inorganic filler having a typical platelet shaped particles. The patent claimed that the molded parts based on such compositions have high falling dart impact resistance and good heat resistance under loading.

US2007/0072960 A1 discloses that compositions comprising mineral fillers with a surface treatment by pretreating and mixing the filler with a vinyl functional silane coupling agent can have an improved balance of properties.

U.S. Pat. No. 5,965,655 discloses PC/ABS compositions with mineral fillers having needle-like particles (e.g. wollastonite). The patent claimed that molded articles having external coatings have improved balanced material properties such as high resistance to impact, high stiffness, and even class A finish.

US2005/0182165A1 disclosed a composition comprising polycarbonate/siloxane, a mineral filler (e.g. Wollastonite) and phosphate flame retardant agent, the compositions have good properties such as good flame resistance, impact resistance and flexural modulus.

U.S. Pat. No. 6664362 discloses a wollastonite filled flame retardant PC/ABS composition, which has excellent resistance to hydrolysis and excellent FR property.

However, none of the above-mentioned patents or applications provides a wollastonite filled polycarbonate composition, which can be used to prepare molded parts having high impact strength, high heat resistance, and good aesthetic appearance, particularly around sprue gates.

Thus, a need continues to exist for a composition which can be used to prepare molded parts having high impact strength, high heat resistance, and good aesthetic appearance, particularly around sprue gates.

### SUMMARY OF THE INVENTION

One objective of the present application is thus to provide a polycarbonate composition which can be used to prepare molded parts having a good combination of impact strength, heat resistance, and aesthetic appearance.

Another object of the present application is to provide an article which has a good combination of impact strength, heat resistance, and aesthetic appearance.

In a first aspect, the present invention provides a polycarbonate composition comprising the following components, relative to the total weight of the composition:
A) 40-85 wt.% of an aromatic polycarbonate,
B) 1-30 wt.% of acrylonitrile-butadiene-styrene (ABS),
C) 8-15 wt.% of wollastonite,
D) 1-3.5 wt.% of bisphenol-A bis(diphenyl phosphate), and
E) 2.5-6 wt.% of styrene-acrylonitrile-methacrylate.

The inventors have discovered unexpectedly that the composition according to the present invention can be used to prepare molded parts having a good combination of impact strength, heat resistance, and aesthetic appearance. For example, the molded parts prepared a Vicat temperature not lower than 110 °C as determined according to ISO 306: 2013, and an impact strength more than 8kJ/m² as determined according to ISO 180/A:2000. Meanwhile, the molded parts prepared have good aesthetic appearance, i.e. there is no visible gate streak on the surface, especially nearby the sprue gates of mold parts.

In a second aspect, the present invention provides a shaped article made from a polycarbonate composition according to the first aspect of the present invention.

In a third aspect, the present invention provides a process for preparing the shaped article mentioned above, comprising injection moulding, extrusion moulding, blow moulding or thermoforming the polycarbonate composition according to the first aspect of the present invention.

Other subjects and characteristics, aspects and advantages of the present invention will emerge even more clearly on reading the description and the examples that follow.

### DETAILED DESCRIPTION OF THE INVENTION

In that which follows and unless otherwise indicated, the limits of a range of values are included within this range, in particular in the expressions "between...and..." and "from ... to ...".

Unless defined otherwise, all technical and scientific terms used herein have the same meaning as commonly understood by one of ordinary skill in the art to which the present invention pertains. When the definition of a term in the present description conflicts with the meaning as commonly understood by those skilled in the art the present invention belongs to, the definition described herein shall apply.

Throughout the instant application, the term "comprising" is to be interpreted as encompassing all specifically mentioned features as well optional, additional, unspecified ones. As used herein, the use of the term "comprising" also discloses the embodiment wherein no features other than the specifically mentioned features are present (i.e. "consisting of").

Unless otherwise specified, all numerical values expressing amount of ingredients and the like which are used in the description and claims are to be understood as being modified by the term "about".

### Component A

The polycarbonate composition according to the present invention comprises an aromatic polycarbonate.

According to the invention, "aromatic polycarbonates" or else just "polycarbonates" is to be understood as meaning both homopolycarbonates and copolycarbonates, in particular aromatic ones. These polycarbonates may be linear or branched in known fashion. According to the invention, mixtures of polycarbonates may also be used.

Aromatic polycarbonates selected in accordance with the invention preferably have weight-average molecular weights M_{w} of 15 000 to 40 000 g/mol, more preferably of 16 000 to 34 000 g/mol, even more preferably of 17 000 to 33 000 g/mol, most preferably of 19 000 to 32 000 g/mol. The values for M_{w} here are determined by a gel permeation chromatography, calibrated against bisphenol A polycarbonate standards using dichloromethane as eluent, calibration with linear polycarbonates (made of bisphenol A and phosgene) of known molar mass distribution from PSS Polymer Standards Service GmbH, Germany; calibration according to method 2301-0257502-09D (2009 Edition in German) from Currenta GmbH & Co. OHG, Leverkusen. The eluent is dichloromethane. Column combination of crosslinked styrenedivinylbenzene resins. Diameter of analytical columns: 7.5 mm; length: 300 mm. Particle sizes of column material: 3 µm to 20 µm. Concentration of solutions: 0.2% by weight. Flow rate: 1.0 ml/min, temperature of solutions: 30°C. Detection is carried out using a refractive index (RI) detector.

The polycarbonates are preferably produced by the interfacial process or the melt transesterification process, which have been described many times in the literature.

With regard to the interfacial process reference is made for example to H. Schnell, "Chemistry and Physics of Polycarbonates", Polymer Reviews, Vol. 9, Interscience Publishers, New York 1964 p. 33 et seq., to Polymer Reviews, Vol. 10, "Condensation Polymers by Interfacial and Solution Methods", Paul W. Morgan, Interscience Publishers, New York 1965, Chapt. VIII, p. 325, to Dres. U. Grigo, K. Kircher and P. R- Müller "Polycarbonate" in Becker/Braun, Kunststoff-Handbuch, Volume 3/1, Polycarbonate, Polyacetale, Polyester, Celluloseester, Carl Hanser Verlag Munich, Vienna 1992, pp. 118-145 and also to EP 0 517 044 A1.

The melt transesterification process is described, for example, in the "Encyclopedia of Polymer Science", Vol. 10 (1969), Chemistry and Physics of Polycarbonates, Polymer Reviews, H. Schnell, Vol. 9, John Wiley and Sons, Inc. (1964), and in patent specifications DE 10 31 512 A and US 6,228,973 B1.

Particulars pertaining to the production of polycarbonates are disclosed in many patent documents spanning approximately the last 40 years. Reference may be made here by way of example to Schnell, "Chemistry and Physics of Polycarbonates", Polymer Reviews, Volume 9, Interscience Publishers, New York, London, Sydney 1964, to D. Freitag, U. Grigo, P.R. Müller, H. Nouvertné, BAYER AG, "Polycarbonates" in Encyclopedia of Polymer Science and Engineering, Volume 11, Second Edition, 1988, pages 648-718, and finally to U. Grigo, K. Kirchner and P.R. Müller "Polycarbonate" in Becker/Braun, Kunststoff-Handbuch, Volume 3/1, Polycarbonate, Polyacetale, Polyester, Celluloseester, Carl HanserVerlag Munich, Vienna 1992, pages 117-299.

The production of aromatic polycarbonates is effected for example by reaction of dihydroxyaryl compounds with carbonic halides, preferably phosgene, and/or with aromatic dicarboxyl dihalides, preferably benzenedicarboxyl dihalides, by the interfacial process, optionally using chain terminators and optionally using trifunctional or more than trifunctional branching agents, production of the polyester carbonates being achieved by replacing a portion of the carbonic acid derivatives with aromatic dicarboxylic acids or derivatives of the dicarboxylic acids, specifically with aromatic dicarboxylic ester structural units according to the carbonate structural units to be replaced in the aromatic polycarbonates. Preparation via a melt polymerization process by reaction of dihydroxyaryl compounds with, for example, diphenyl carbonate is likewise possible.

Dihydroxyaryl compounds suitable for the production of polycarbonates are for example hydroquinone, resorcinol, dihydroxydiphenyls, bis(hydroxyphenyl)alkanes, bis(hydroxyphenyl)cycloalkanes, bis(hydroxyphenyl) sulfides, bis(hydroxyphenyl) ethers, bis(hydroxyphenyl) ketones, bis(hydroxyphenyl) sulfones, bis(hydroxyphenyl) sulfoxides, α,α'-bis(hydroxyphenyl)diisopropylbenzenes, phthalimidines derived from derivatives of isatin or phenolphthalein and the ring-alkylated, ring-arylated and ring-halogenated compounds thereof.

Preferred dihydroxyaryl compounds are 4,4'-dihydroxydiphenyl, 2,2-bis(4-hydroxyphenyl)propane (bisphenol A), 2,4-bis(4-hydroxyphenyl)-2-methylbutane, 1,1-bis(4-hydroxyphenyl)-p-diisopropylbenzene, 2,2-bis(3-methyl-4-hydroxyphenyl)propane, dimethylbisphenol A, bis(3,5-dimethyl-4-hydroxyphenyl)methane, 2,2-bis(3,5-dimethyl-4-hydroxyphenyl)propane, bis(3,5-dimethyl-4-hydroxyphenyl)sulfone, 2,4-bis(3,5-dimethyl-4-hydroxyphenyl)-2-methylbutane, 1,1-bis(3,5-dimethyl-4-hydroxyphenyl)-p-diisopropylbenzene and 1,1-bis(4-hydroxyphenyl)-3,3,5-trimethylcyclohexane and also the bisphenols (I) to (III) 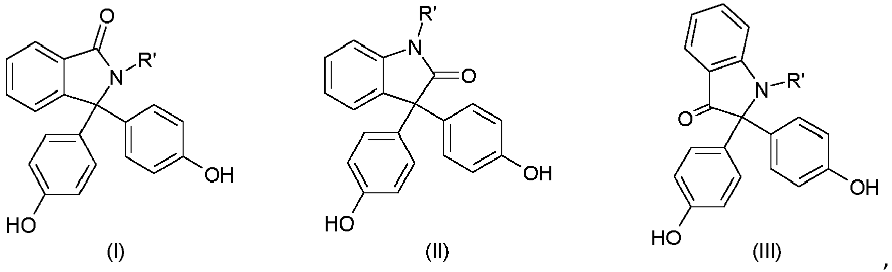 in which R' in each case stands for C₁- to C₄-alkyl, aralkyl or aryl, preferably for methyl or phenyl, very particularly preferably for methyl.

Particularly preferred dihydroxyaryl compounds are 2,2-bis(4-hydroxyphenyl)propane (bisphenol A), 2,2-bis(3,5-dimethyl-4-hydroxyphenyl)propane, 1,1-bis(4-hydroxyphenyl)cyclohexane, 1,1-bis(4-hydroxyphenyl)-3,3,5-trimethylcyclohexane, 4,4'-dihydroxybiphenyl, and dimethylbisphenol A and also the diphenols of formulae (I), (II) and (III).

These and other suitable dihydroxyaryl compounds are described for example in US 3 028 635 A, US 2 999 825 A, US 3 148 172 A, US 2 991 273 A, US 3 271 367 A, US 4 982 014 A und US 2 999 846 A, in DE 1 570 703 A, DE 2063 050 A, DE 2 036 052 A, DE 2 211 956 A and US 2 999 846 A, in DE 1 570 703 A, DE 2063 050 A, DE 2 036 052 A, DE 2 211 956 A and DE 3 832 396 A, in FR 1 561 518, in the monograph "H. Schnell, Chemistry and Physics of Polycarbonates, Interscience Publishers, New York 1964" and also in JP 62039/1986 A, JP 62040/1986 A and JP 105550/1986 A.

In the case of homopolycarbonates only one dihydroxyaryl compound is used; in the case of copolycarbonates two or more dihydroxyaryl compounds are used. The dihydroxyaryl compounds employed, similarly to all other chemicals and assistants added to the synthesis, may be contaminated with the contaminants from their own synthesis, handling and storage. However, it is desirable to use raw materials of the highest possible purity.

Suitable carbonic acid derivatives are for example phosgene and diphenyl carbonate.

Suitable chain terminators that may be used in the production of polycarbonates are monophenols. Suitable monophenols are for example phenol itself, alkylphenols such as cresols, p-tert-butylphenol, cumylphenol and mixtures thereof.

Preferred chain terminators are the phenols mono- or polysubstituted by linear or branched C₁- to C₃₀-alkyl radicals, preferably unsubstituted or substituted by tert-butyl. Particularly preferred chain terminators are phenol, cumylphenol and/or p-tert-butylphenol.

The amount of chain terminator to be employed is preferably 0.1 to 5 mol% based on the moles of diphenols employed in each case. The addition of the chain terminators may be effected before, during or after the reaction with a carbonic acid derivative.

Suitable branching agents are the trifunctional or more than trifunctional compounds familiar in polycarbonate chemistry, in particular those having three or more than three phenolic OH groups. Suitable branching agents are for example 1,3,5-tri(4-hydroxyphenyl)benzene, 1,1,1-tri(4-hydroxyphenyl)ethane, tri(4-hydroxyphenyl)phenylmethane, 2,4-bis(4-hydroxyphenylisopropyl)phenol, 2,6-bis(2-hydroxy-5'-methylbenzyl)-4-methylphenol, 2-(4-hydroxyphenyl)-2-(2,4-dihydroxyphenyl)propane, tetra(4-hydroxyphenyl)methane, tetra(4-(4-hydroxyphenylisopropyl)phenoxy)methane and 1,4-bis((4',4"-dihydroxytriphenyl)methyl)benzene and 3,3-bis(3-methyl-4-hydroxyphenyl)-2-oxo-2,3-dihydroindole.The amount of the branching agents for optional employment is preferably 0.05 mol% to 2.00 mol%, based on moles of dihydroxyaryl compounds used in each case. The branching agents may be either initially charged together with the dihydroxyaryl compounds and the chain terminators in the aqueous alkaline phase or added dissolved in an organic solvent before the phosgenation. In the case of the transesterification process the branching agents are employed together with the dihydroxyaryl compounds.

Particularly preferred polycarbonates are the homopolycarbonate based on bisphenol A, the homopolycarbonate based on 1,1-bis(4-hydroxyphenyl)-3,3,5-trimethylcyclohexane, 4,4'-dihydroxybiphenyl, and the copolycarbonates based on the two monomers bisphenol A and 1,1-bis(4-hydroxyphenyl)-3,3,5-trimethylcyclohexane and also homo- or copolycarbonates derived from the diphenols of formulae (I), (II) and (III) 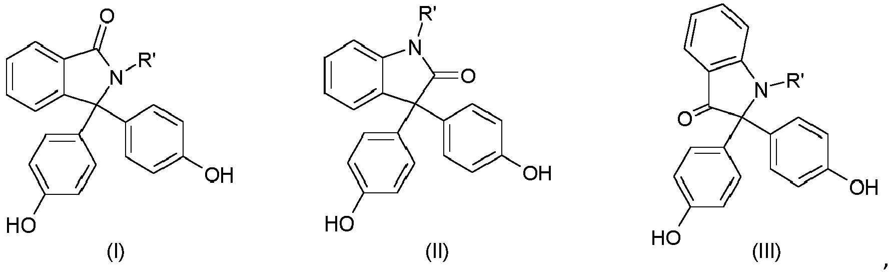 in which R' in each case stands for C₁- to C₄-alkyl, aralkyl or aryl, preferably for methyl or phenyl, very particularly preferably for methyl.

Preferred are also polycarbonates for the production of which dihydroxyaryl compounds of the following formula (1a) have been used: 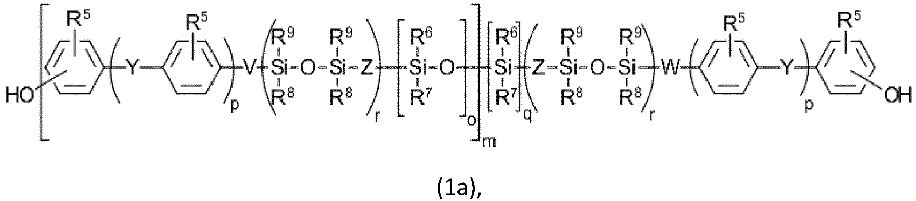 wherein
R⁵ stands for hydrogen or C₁- to C₄-alkyl, C₁- to C₄-alkoxy, preferably for hydrogen or methyl or methoxy particularly preferably for hydrogen,
R⁶, R⁷, R⁸ and R⁹ mutually independently stand for C₆- to C₁₂-aryl or C₁- to C₄-alkyl, preferably phenyl or methyl, in particular for methyl,
Y stands for a single bond, SO₂-, -S-, -CO-, -O-, C₁- to C₆-alkylene, C₂- to C₅-alkylidene, C₆- to C₁₂-arylene, which can optionally be condensed with further aromatic rings containing hetero atoms, or for a C₅- to C₆-cycloalkylidene residue, which can be singly or multiply substituted with C₁- to C₄-alkyl, preferably for a single bond, -O-, isopropylidene or for a Cs-to C₆-cycloalkylidene residue, which can be singly or multiply substituted with C₁- to C₄-alkyl,
V stands for oxygen, C₂- to C₆-alkylene or C₃- to C₆-alkylidene, preferably for oxygen or C₃- alkylene,
p, q and r mutually independently each stand 0 or 1,
if q = 0, W is a single bond, if q = 1 and r = 0 is, W stands for -O-, C₂- to C₆-alkylene or C₃- to C₆-alkylidene, preferably for -O- or C₃-alkylene,
if q = 1 and r = 1, W and V mutually independently stand for C₂- to C₆-alkylene or C₃-to C₆-alkylidene, preferably for C₃ alkylene,
Z stands for C₁- to C₆-alkylene, preferably C₂-alkylene,
o stands for an average number of repeating units from 10 to 500, preferably 10 to 100 and
m stands for an average number of repeating units from 1 to 10, preferably 1 to 6, particularly preferably 1.5 to 5.

It is also possible to use dihydroxyaryl compounds, in which two or more siloxane blocks of general formula (1a) are linked via terephthalic acid and/or isophthalic acid under formation of ester groups.

Especially preferable are (poly)siloxanes of the formulae (2) and (3) 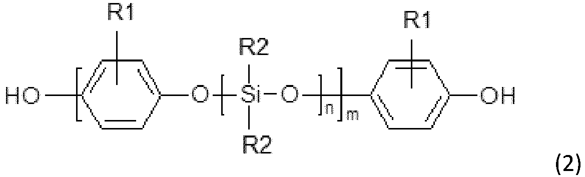 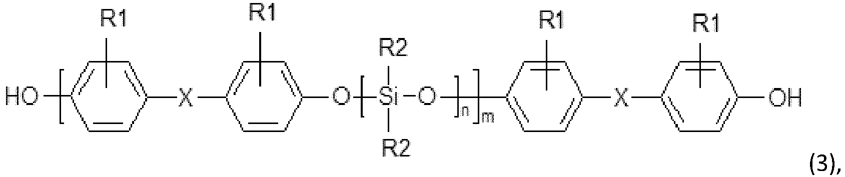
wherein R¹ stands for hydrogen, C₁- to C₄-alkyl, preferably for hydrogen or methyl and especially preferably for hydrogen,
R² mutually independently stand for aryl or alkyl, preferably for methyl,
X stands for a single bond, -SO₂-, -CO-, -O-, -S-, C₁- to C₆-alkylene, C₂- to Cs-alkylidene or for C₆- to C₁₂-arylene, which can optionally be condensed with further aromatic rings containing hetero atoms,
X stands for a single bond, -SO₂-, -CO-, -O-, -S-, C₁- to C₆-alkylene, C₂- to C₅-alkylidene, C₅- to C₁₂-cycloalkylidene or for C₆- to C₁₂-arylene, which can optionally be condensed with further aromatic rings containing hetero atoms,
X preferably stands for a single bond, isopropylidene, C₅- to C₁₂-cycloalkylidene or oxygen, and especially preferably stands for isopropylidene,
n means an average number from 10 to 400, preferably 10 and 100, especially preferably 15 to 50 and
m stands for an average number from 1 to 10, preferably 1 to 6 and especially preferably from 1.5 to 5.

Also preferably the siloxane block can be derived from one of the following structures: 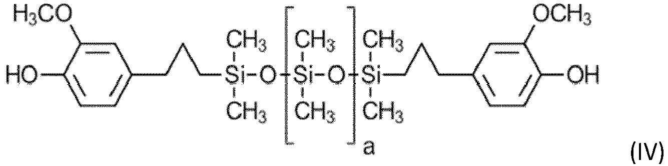 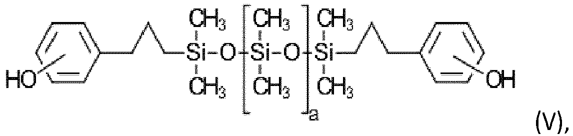 preferably (Va) 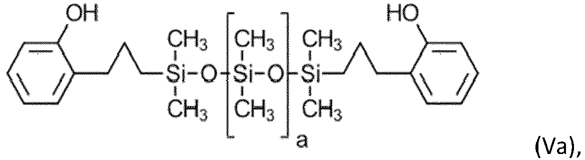 or 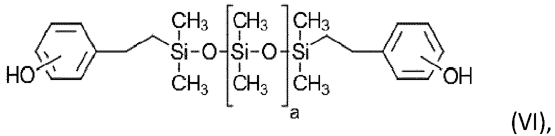 wherein a in formulae (IV), (V) und (VI) means an average number from 10 to 400, preferably from 10 to 100 and especially preferably from 15 to 50.

It is equally preferable, that at least two of the same or different siloxane blocks of the general formulae (IV), (V) or (VI) are linked via terephthalic acid and/isophthalic acid under formation of ester groups.
It is also preferable, if p = 0 in formula (1a), V stands for C₃-alkylene,
if r = 1, Z stands for C₂-alkylene, R⁸ and R⁹ stand for methyl,
if q = 1, W stands for C₃-alkylene,
if m = 1, R⁵ stands for hydrogen or C₁- to C₄-alkyl, preferably for hydrogen or methyl, R⁶ and R⁷ mutually independently stand for C₁- to C₄-alkyl, preferably methyl, and o stands for 10 to 500.

Copolycarbonates with monomer units of the general formula (1a), in particular with bisphenol A, and in particular the production of those copolycarbonates are described in WO 2015/052106 A2.

As examples of aromatic polycarbonate suitable for the present invention, mention can be made of those produced from bisphenol A and phosgene, and sold under the trade name Makrolon^{®} 2400, Makrolon^{®} 2600, Makrolon^{®} 2800, Makrolon^{®} 3100 by Covestro Co., Ltd.

Advantageously, the aromatic polycarbonate is present in an amount ranging from 40 wt. % to 85 wt. %, more preferably from 45 wt. % to 80 wt. %, even more preferably from 50 wt. % to 75 wt. %, relative to the total weight of the composition according to the present invention.

### Component B

The polycarbonate composition according to the present invention comprises a coreshell impact modifier selected from acrylonitrile-butadiene-styrene.

Acrylonitrile-butadiene-styrene (ABS) is described e.g. in DE-OS 2 035 390 or in DE-OS 2 248 242 and in Ullmanns, Enzyklopädie der Technischen Chemie, vol. 19 (1980), p. 280 et seq.

Preferably, acrylonitrile-butadiene-styrene (ABS) comprises 5 wt.% to 95 wt.%, preferably 8 wt.% to 90 wt.%, in particular 20 wt.% to 85 wt.% of units derived from acrylonitrile and styrene, and 95 wt.% to 5 wt.%, preferably 92 wt.% to 10 wt.%, in particular 80 wt.% to 15 wt.% of units derived from butadiene, based on the weight of acrylonitrile-butadiene-styrene.

More preferably, acrylonitrile-butadiene-styrene (ABS) comprises 15 wt.% to 35 wt.%, of units derived from acrylonitrile, 40 wt.% to 60 wt.% of units derived from styrene, and 5 wt.% to 30 wt.% of units derived butadiene, based on the weight of acrylonitrile-butadiene-styrene.

As commercial products of acrylonitrile-butadiene-styrene can be used in the present invention, mention can be made to ABS 8391 available from SINOPEC Shanghai Gaoqiao Company having a polybutadiene rubber content of 5-30 wt.%, styrene content of 40-60 wt.%, and acrylonitrile content of 15-35 wt.%, and ABS HRG powder P60 available from Styrolution, produced by emulsion polymerisation of 42-45 wt. %, based on the ABS polymer, of a mixture of 27 wt. % acrylonitrile and 73 wt. % styrene in the presence of 55-58 wt. %, based on the ABS polymer, of a crosslinked polybutadiene rubber (the average particle diameter dso is 0.3 µm).

Advantageously, acrylonitrile-butadiene-styrene is present in an amount ranging from 1 wt. % to 30 wt. %, preferably from 3 wt. % to 26 wt. %, relative to the total weight of the polycarbonate composition.

### Component C

The polycarbonate composition according to the present invention comprises wollastonite.

The term "wollastonite" refers to the various mineral forms of calcium silicate (CaSiO₃).

For example, wollastonite useful in the polycarbonate composition according to the present invention includes, purified wollastonite, which includes approximately 48% calcium oxide (CaO) and 52% silicon dioxide (SiO₂) by weight, and substituted forms wherein relatively small amounts of iron, manganese, and/or magnesium substitute for calcium in the mineral form.

Wollastonite forms generally compact, fibrous, columnar, foliate or fine-fiber masses, and in some cases also tabular to needle-shaped particles, which are commercially available.

Preferably, needle-shaped wollastonite particles are used in the polycarbonate composition according to the present invention.

Wollastonite particles useful for the present invention may have a particle size (d₅₀) of less than 100 µm, less than 50 µm, or less than 25 µm. For example, wollastonite particles may have a particle size (d₅₀) in the range of 3 µm to 50 µm, or any sub-range subsumed therein, such as, for example, 3 µm to 30 µm, 3 µm to 25 µm, 4 µm to 20 µm, or 5 µm to 15 µm.

For the purpose of the present invention, the particle size (d₅₀) indicates a particle size, such that 50 wt.% of the relevant material has a larger particle size and 50 wt.% of the relevant material have a smaller particle size.

The dso average size of particles can be determined via a method known to the person skilled in the art, for example via light scattering techniques (dynamic or laser) using the respective equipment, for example available from the companies Malvern (e.g. Mastersizer^{®} Micro or 3000) or Coulter (e.g. LS 230^{®}).

Preferably, wollastonite particles may have an acicular morphology with an aspect ratio (L:D) in the range of 3:1 to 15:1 or any sub-range subsumed therein, such as, 4:1 to 10:1, preferably 5:1 to 10:1.

It has surprisingly been found that molded parts obtained with a polycarbonate composition according to the present invention containing wollastonite having the aspect ratio of 5:1 to 10:1 exhibit desired properties, and in particular reduced gate streaks.

Preferably, wollastonite used in the present invention is surface-treated with functionalized silane coupling agents. As examples, the funtionalized silane coupling agents can be selected from vinyltriethoxysilane, vinylmethyldiethoxysilane, vinylmethyldimethoxysilane, vinyltris-(2-methoxyethoxy)silane, methacryloxypropyltrimethoxysilane, methacryloxypropyltriethoxysilane, and a combination thereof.

Examples of suitable wollastonite include, for example, wollastonite available from NYCO Minerals, Inc., Willsboro, NY, USA, under the names NYGLOS and NYAD, and that available from the company Quarzwerke GmbH under the name of TREMIN.

Advantageously, the wollastonite is present in an amount ranging from 8 wt. % to 15 wt. %, preferably from 10 wt. % to 15 wt. %, relative to the total weight of the polycarbonate composition.

### Component D

The polycarbonate composition of the present invention comprise bisphenol-A bis(diphenyl phosphate).

Bisphenol-A bis(diphenyl phosphate) has the following formula: 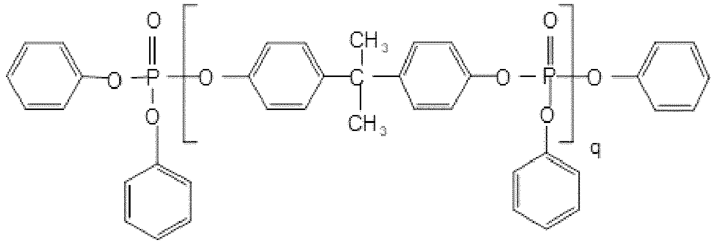 wherein q denotes a number ranging from 0.8 to 5.0, preferably 0.9 to 3.0, more preferably 1.0 to 1.5, and particularly preferably from 1.05 to 1.2.

In some embodiments, the composition according to the present invention comprises bisphenol-A bis(diphenyl phosphate) of the following formula.

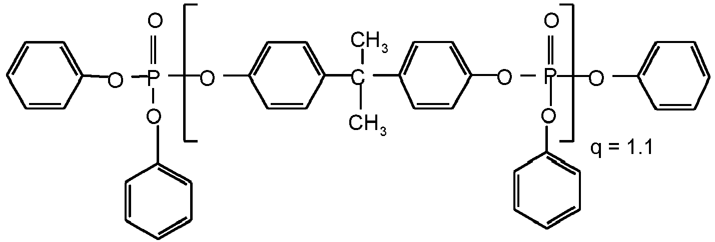

Bisphenol-A bis(diphenyl phosphate) can be produced by known methods in an analogous manner (e.g. Ullmanns Enzyklopadie der technischen Chemie, vol. 18, pp. 301 ff. 1979; Houben-Weyl, Methoden der organischen Chemie, vol. 12/1, p. 43; Beilstein vol. 6, p. 177).

Advantageously, bisphenol-A bis(diphenyl phosphate) is present in an amount ranging from 1 wt. % to 3.5 wt. %, preferably from 1 wt. % to 3 wt. %, preferably from 2 wt. % to 3 wt. %, relative to the total weight of the polycarbonate composition.

It was found that a good balance among flowability, surface appearance and heat resistance can be achieved by using a combination of bisphenol-A bis(diphenyl phosphate), together with styrene-acrylonitrile-methacrylate.

### Component E

The polycarbonate composition of the present invention comprises styrene-acrylonitrile-methacrylate.

As used herein, styrene-acrylonitrile-methacrylate means copolymer of styrene, acrylonitrile, and methacrylate.

As examples of methacrylate, mention can be made to methyl methacrylate (MMA), glycidyl methacrylate (GMA), ethyl methacrylate, n-butyl methacrylate, benzyl methacrylate, lauryl methacrylate, stearyl methacrylate, cyclopentyl methacrylate, cyclohexyl methacrylate, and benzyl methacrylate.

Preferably, the styrene-acrylonitrile-methacrylate is selected from styrene-acrylonitrile-methyl methacrylate, styrene-acrylonitrile-glycidyl methacrylate, and a combination thereof.

Preferably, styrene-acrylonitrile-methacrylate comprises 50 wt.% to 95 wt.%, of units derived from styrene, 4 wt.% to 45 wt.% of units derived from acrylonitrile, and 1 wt.% to 5 wt.% of units derived methacrylate, based on the weight of styrene-acrylonitrile-methacrylate.

Advantageously, styrene-acrylonitrile-methacrylate is present in an amount ranging from 2.5 wt. % to 6 wt. %, preferably from 3 wt. % to 5 wt. %, more preferably from 3 wt. % to 4 wt. %, relative to the total weight of the polycarbonate composition.

### Additional components

In addition to components A-E mentioned above, the polycarbonate compositions according to the present invention can optionally comprise one or more additives conventionally used in polycarbonate compositions as additional components. Such additives are, for example, fillers, UV stabilizers, IR stabilizers, heat stabilizers, antistatic agents, pigments (such as carbon black), colorants, lubricants (such as waxes), demoulding agents (such as pentaerythrityl tetrastearate), antioxidants, pH adjusters, flow improvers agents, anti-dripping agents (such as poly(tetrafluoroethylene)), etc.

The person skilled in the art can select the type of the additives so as not to adversely affect the desired properties of the polycarbonate composition according to the present invention.

In some embodiments, the composition according to the present invention may further comprises, up to 5 wt.%, preferably up to 3 wt.%, more preferably from 0.1 wt.% to 3 wt.%, based on the total weight of composition, an additional component selected from the group consisting of antioxidants, heat stabilizers, demoulding agents, antistatic agents, pigments, pH adjusters, and lubricants.

Preferably, the polycarbonate composition according to the present invention comprises, relative to the total weight of the composition:
A) 50-75 wt.% of an aromatic polycarbonate,
B) 3-26 wt.% of acrylonitrile-butadiene-styrene,
C) 10-15 wt.% of surface-treated wollastonite with an aspect ratio (L:D) in the range of of 5:1 to 10:1,
D) 2-3 wt.% of bisphenol-A bis(diphenyl phosphate), and
E) 3-4 wt.% of styrene-acrylonitrile-methacrylate.

Advantageously, the total amount of components A)-E) as defined above is from 90 wt.% to 100 wt.%, preferably from 95 wt.% to 100 wt.%, more preferably from 97 wt.% to 100 wt.%, based on the total weight of the polycarbonate composition according to the present invention.

### Preparation of the polycarbonate composition

The polycarbonate composition according to the present invention can be in the form of, for example, pellets.

The polycarbonate composition according to the present invention demonstrates a good processing behaviour and can be prepared by a variety of methods involving intimate admixing of the materials desired in the composition.

For example, the materials desired in the composition are first blended in a high speed mixer. Low shear processes, including but not limited to hand mixing, can also accomplish this blending. The blend is then fed into the throat of a twin-screw extruder via a hopper. Alternatively, at least one of the components can be incorporated into the composition by feeding it directly into the extruder at the throat and/or downstream through a side stuffer. Additives can also be compounded into a masterbatch with a desired polymeric resin and fed into the extruder. The extruder is generally operated at a temperature higher than that necessary to cause the composition to flow. The extrudate is immediately quenched in a water bath and pelletized. The pellets can be one-fourth inch long or less as described. Such pellets can be used for subsequent molding, shaping or forming.

Melt blending methods are preferred due to the availability of melt blending equipment in commercial polymer processing facilities.

Illustrative examples of equipment used in such melt processing methods include corotating and counter-rotating extruders, single screw extruders, co-kneaders, and various other types of extrusion equipment.

The temperature of the melt in the processing is preferably minimized in order to avoid excessive degradation of the polymers. It is often desirable to maintain the melt temperature between 200 °C and 330 °C in the molten resin composition, although higher temperatures can be used provided that the residence time of the resin in the processing equipment is kept short.

In some cases, the melting composition exits from a processing equipment such as an extruder through small exit holes in a die. The resulting strands of the molten resin are cooled by passing the strands through a water bath. The cooled strands can be chopped into small pellets for packaging and further handling.

### Shaped articles

The polycarbonate compositions according to the present invention can be used, for example for the production of various types of shaped articles.

In the second aspect, the present invention also provides a shaped article made from a polycarbonate composition according to the first aspect of the present invention.

As examples of such shaped articles mention can be made of, for example, films; profiles; housing parts, e.g. for domestic appliances sheets; tubes; windows, doors and other profiles for the building sector (interior and exterior applications); and exterior parts or interior parts for commercial vehicles.

### Preparation of shaped articles

The polycarbonate compositions according to the present invention can be processed into shaped articles by a variety of means such as injection moulding, extrusion moulding, blow moulding or thermoforming to form shaped articles.

In the third aspect, the present invention provides a process for preparing the shaped article made from a composition according to the first aspect of the present invention, comprising injection moulding, extrusion moulding, blow moulding or thermoforming the polycarbonate composition according to the present invention.

### Examples

The present invention will be illustrated in detail below with reference to the examples below. The examples are only for the purpose of illustration, rather than limiting the scope of the present invention.

### Materials used

### Component A

PC-1: available from the company Covestro Polymer (China), a linear polycarbonate based on bisphenol A have a weight average molecular weight of 26000 g/mol, as determined by means of Gel Permeation Chromatography (GPC) in methylene chloride at 25 °C using a polycarbonate standard.

PC-2: available from the company Covestro Polymer (China), a linear polycarbonate based on bisphenol A having a weight average molecular weight (Mw) of 24000 g/mol, as determined by means of Gel Permeation Chromatography (GPC) in methylene chloride at 25 °C using a polycarbonate standard.

PC-3: commercially available from the company Covestro Polymer (China), a linear polycarbonate based on bisphenol A having a weight average molecular weight (Mw) of 20000 g/mol, as determined by means of Gel Permeation Chromatography (GPC) in methylene chloride at 25 °C using a polycarbonate standard.

### Component B

ABS: having a polybutadiene rubber content of 5-30 wt.%, styrene content of 40-60 wt.%, and acrylonitrile content of 15-35 wt.% based on the ABS polymer, available as ABS 8391 from SINOPEC Shanghai Gaoqiao.

### Component C

Wollastonite-1: having an average particle size of 7 µm and an average length of 63 µm, with surface-treated by functionalized silane coupling agents, available as NYGLOS 4W 10992 from the company Zhejiang Wansheng Science China.

Wollastonite-2: having an average particle size of 4 µm and an average length of 23 µm, with surface treated by functionalized silane coupling agents, available as TREMIN 939-600 KST from the company Quarzwerke GmbH.

### Component D

BDP: bisphenol-A bis(diphenyl phosphate), available from the company Zhejiang Wansheng Science China.

### Component E

SAN-GMA: Styrene-acrylonitrile-glycidyl methacrylate, available as Fine-Blend SAG-005 from the company Fine-Blend Co., Ltd.

SAN-MMA: Styrene-acrylonitrile-methylmethacrylate, available as Blendex 866 from the company Galata Chemicals.

### Other components

PETS: pentaerythritol tetrastearate powder, a demolding agent, available as FACI L348 from FACI Asia Pacific Pte Ltd. (Singapore).

Irganox^{®} B900: a mixture of 80% Irgafos^{®} 168 and 20% Irganox^{®} 1076 available from the company BASF, wherein Irgafos^{®}168 is (tris (2,4-di-tert-butylphenyl)phosphite), Irganox^{®} 1076 is (2,6-di-tert-butyl-4-(octadecanoxy-carbonylethyl)-phenol.

Carbon black: available from the company Cabot Co., Ltd. China.

Phosphorous acid: H₃PO₃, available from the company Sigma-Aldrich Chemie GmbH.

Hi-wax 1105: an acid-modified polyethylene wax with a weight-average molecular weight of 1500 g/mol, available from the company Mitsui Chemicals Inc.

Ethylene diamine-tetraacetic acid (EDTA): available as Trilon BS from the company Shijiazhuang Jackchem Co., Ltd. China.

Citric acid: available from the company Shijiazhuang Jackchem Co., Ltd. China.

### Test methods

The physical properties of specimens in the examples were tested as follows.

### Melt volume flow rate (MVR)

The melt volume flow rate (MVR) was determined according to ISO 1133: 2011 at 260°C and a loading of 5 kg with a Zwick 4106 instrument from Roell.

### Izod notched impact strength

Izod notched impact strength was measured on specimens with dimensions of 80 mm ×10 mm ×4 mm according to ISO180/1A:2000 (23°C, 4 mm, 5.5J).

### Izod unnotched impact strength

Izod unnotched impact strength was measured on specimens with dimensions of 80 mm ×10 mm ×4 mm according to ISO180/U:2000 23°C, 4 mm, 5.5J).

### Vicat softening temperature

The Vicat softening temperature (T_{Vicat}) was determined on test specimens of dimension of 80mm×10mm×4mm according to ISO 306: 2013 with a ram load of 50 N and a heating rate of 120 °C/h with a Coesfeld Eco 2920 instrument from Coesfeld Materialtest.

### Heat distortion temperature (HDT)

The heat distortion temperature (HDT) was measured on samples of 80 mm × 10 mm × 4 mm under a load of 1.8 MPa according to ISO 75-2:2013.

### Gate streak rank

Gate streak is determined as follows:
the material pellets to be tested were dried at 100°C for 4h, and then molded parts with a size of 150 mm × 100 mm × 3 mm was produced by KraussMaffei 110 ton hydraulic

Injection molding machine with a screw of Φ35mm. The gate steak of molded parts is ranked as follows:

| Gate streak rank | Description^{∗} |
|---|---|
| 0 | None gate streak |
| 1 | Slight gate steak |
| 1.5 | Slight + gate streak |
| 2 | Slight ++ gate streak |
| 2.5 | Slight +++ gate streak |
| 3 | Visible gate streak |
| 3.5 | Visible + gate streak |
| 4 | Visible ++ gate streak |
| 4.5 | Visible +++ gate streak |
| 5 | Serious gate streak |
| 5.5 | Serious + gate streak |
| 6 | Serious ++ gate streak |

Defect rank sequence: *None < Slight < Visible < Serious,* the more suffixes of "+ ", the more serious gate streak.

### Comparative Examples (CE) 1-12

The materials listed in Table 1 were compounded on a twin-screw extruder (ZSK-26) (from Coperion, Werner and Pfleiderer) at a speed of rotation of 225 rpm, a throughput of 30 kg/h, and a machine temperature of 260°C-290°C and granulated.

The pellets obtained were processed into corresponding testing specimens on an injection moulding machine (from Arburg) with a melting temperature of 260-300°C a mold temperature of 80 °C, and a flow front velocity 240 mm/s.

The properties (including melt volume flow rate (MVR), Izod notched impact strength, Izod unnotched impact strength, Vicat softening temperature, heat distortion temperature, surface performance (such as gate streak rank)of the compositions obtained were tested and the results were summarized in Table 1.

**Table 1**

| | CE1 | CE2 | CE3 | CE4 | CE5 | CE6 | CE7 | CE8 | CE9 | CE10 | CE11 | CE12 |
|---|---|---|---|---|---|---|---|---|---|---|---|---|
| PC-1 | | | | 63.5 | 60.5 | 52 | 49 | | | | 46.5 | 46.5 |
| PC-2 | 61.55 | 71.6 3 | 60.13 | 5.15 | 5.15 | 5.15 | 5.15 | 51.63 | 40.13 | 40.13 | 5.07 | 5.10 |
| PC-3 | | | | | | | | 17 | 17 | 17 | 17 | 17 |
| ABS | 23 | 11.5 | 23 | 11.5 | 11.5 | 23 | 23 | 11.5 | 23 | 23 | 11.5 | 11.5 |
| Wollastonite-1 | 15 | 15 | 15 | 15 | 15 | 15 | 15 | 15 | 15 | 15 | 15 | 15 |
| BDP | | | | 3 | 6 | 3 | 6 | | | | | |
| SAN-GMA | | | | | | | | 3 | | 3 | | |
| SAN-MMA | | | | | | | | | 3 | | 3 | 3 |
| PETS | 0.6 | 0.6 | 0.6 | 0.6 | 0.6 | 0.6 | 0.6 | 0.6 | 0.6 | 0.6 | 0.6 | 0.6 |
| IRGANOX^{®} B 900 | 0.1 | 0.1 | 0.1 | 0.1 | 0.1 | 0.1 | 0.1 | 0.1 | 0.1 | 0.1 | 0.1 | 0.1 |
| Carbon black | 0.75 | 0.75 | 0.75 | 0.75 | 0.75 | 0.75 | 0.75 | 0.75 | 0.75 | 0.75 | 0.75 | 0.75 |
| Phosphorous acid | | 0.02 | 0.02 | | | | | 0.02 | 0.02 | 0.02 | 0.08 | 0.05 |
| Acid-modified polyethylene wax | 0.4 | 0.4 | 0.4 | 0.4 | 0.4 | 0.4 | 0.4 | 0.4 | 0.4 | 0.4 | 0.4 | 0.4 |

| Testing items | | | | | | | | | | | | |
|---|---|---|---|---|---|---|---|---|---|---|---|---|
| MVR(cm³/10 min) | 18.4 | 19.6 | 23.0 | 21.2 | 33.3 | 26.2 | 40.8 | 17.6 | 17.6 | 16.1 | 13.3 | 12.7 |
| Izod notched impact strength (kJ/m²) | 18 | 14 | 21 | 12 | 8.8 | 17 | 12 | 11 | 16 | 12 | 8.2 | 11 |
| Izod unnotched impact strength (kJ/m²) | 170 | NB | NB | NB | 130 | 160 | 120 | NB | 160 | 130 | 180 | NB |
| T_{Vicat} (°C) | 133 | 139 | 131 | 128 | 118 | 121 | 112 | 136 | 129 | 128 | 138 | 138 |
| HDT (°C) | 109 | 114 | 107 | 106 | 97 | 100 | 91 | 110 | 105 | 102 | 115 | 113 |
| Gate streak rank | 6 | 6 | 6 | 4 | 3.5 | 5.5 | 4 | 5 | 3.5 | 3 | 6 | 5 |

| | | | | | | | | | | | | |
|---|---|---|---|---|---|---|---|---|---|---|---|---|
| "NB" means "not break". | | | | | | | | | | | | |

It can be seen from Table 1 that composition of comparative examples 1-3 not comprising styrene-acrylonitrile-methacrylate and BDP will result in a molded parts will gate streak rank of 6, which is not desired.

Composition of comparative examples 4 and 6 not comprising styrene-acrylonitrile-methacrylate will result in a molded parts will gate streak rank of 4 or 5.5, which is not desired.

Composition of comparative examples 5 and 7 comprising 6 wt.% of BDP and not comprising styrene-acrylonitrile-methacrylate will result in a molded parts will gate streak rank of 3.5 or 4 and a heat distortion temperature of 97 ºC or 91 ºC, which is not desired.

Composition of comparative examples 8-11 not comprising BDP will result in a molded parts will gate streak rank of 3.5-6, which is not desired.

### Comparative Examples (CE) 13-24

Similarly, the materials listed in Table 2 were compounded, the properties of the compositions obtained were tested and the results were summarized in Table 2.

It can be seen from Table 2 that composition of comparative examples 13-17 not comprising styrene-acrylonitrile-methacrylate and BDP will result in a molded parts with a gate streak rank of 4-6, which is not desired.

Composition of comparative examples 18 and 20 not comprising styrene-acrylonitrile-methacrylate will result in molded parts with a gate streak rank of 3 or 4.5, which is not desired.

Composition of comparative examples 19 and 21 not comprising BDP will result in molded parts with a gate streak rank of 3 or 5, which is not desired.

Composition of comparative example 22 comprising 16.5 wt.% of wollastonite-2 will result in a molded parts with a gate streak rank of 5, which is not desired.

Composition of comparative example 23 comprising 2 wt.% of styrene-acrylonitrile-methacrylate and 4 wt.% of will result in a molded parts with a gate streak rank of 3, which is not desired.

Composition of comparative example 24 comprising 2 wt.% of styrene-acrylonitrile-methacrylate will result in a molded parts with a gate streak rank of 3.5, which is not desired.

**Table 2**

| | CE13 | CE14 | CE15 | CE16 | CE17 | CE18 | CE19 | CE20 | CE21 | CE22 | CE23 | CE24 |
|---|---|---|---|---|---|---|---|---|---|---|---|---|
| PC-2 | 54.57 | 71.62 | 71.55 | 65.15 | 62.65 | 62.15 | 62.15 | 59.65 | 59.65 | 52.65 | 70.65 | 71.65 |
| PC-3 | 17 | | | | | | | | | | | |
| ABS | 11.5 | 11.5 | 11.5 | 23 | 23 | 23 | 23 | 23 | 23 | 23 | 11.5 | 11.5 |
| Wollastonite-1 | 15 | 15 | 15 | 10 | 12.5 | 10 | 10 | 12.5 | 12.5 | 16.5 | 10 | 10 |
| BDP | | | | | | 3 | | 3 | | 3 | 4 | 3 |
| SAN-GMA | | | | | | | 3 | | 3 | 3 | 2 | 2 |
| PETS | 0.6 | 0.6 | 0.6 | 0.6 | 0.6 | 0.6 | 0.6 | 0.6 | 0.6 | 0.6 | 0.6 | 0.6 |
| IRGANOX^{®} B 900 | 0.1 | 0.1 | 0.1 | 0.1 | 0.1 | 0.1 | 0.1 | 0.1 | 0.1 | 0.1 | 0.1 | 0.1 |
| Carbon black | 0.75 | 0.75 | 0.75 | 0.75 | 0.75 | 0.75 | 0.75 | 0.75 | 0.75 | 0.75 | 0.75 | 0.75 |
| Acid-modified polyethylene wax | | | | 0.4 | 0.4 | 0.4 | 0.4 | 0.4 | 0.4 | 0.4 | 0.4 | 0.4 |
| Phosphorous acid | 0.08 | | | | | | | | | | | |
| Trilon BS (EDTA) | | 0.03 | | | | | | | | | | |
| Citric acid | | | 0.1 | | | | | | | | | |

| Testing items | | | | | | | | | | | | |
|---|---|---|---|---|---|---|---|---|---|---|---|---|
| MVR(cm³/10 min) | 22.5 | 17.5 | 16.5 | 25.4 | 24.7 | 38.9 | 9 | 37.4 | 14 | 18.4 | 24.1 | 21.6 |
| Izod notched impact strength ( kJ/m²) | 9.0 | 13 | 13 | 23 | 20 | 14 | 19 | 13 | 16 | 12 | 8.8 | 9.3 |
| Izod unnotched impact strength ( kJ/m²) | 210 | NB | NB | 170 | NB | 170 | 210) | 120 | 170 | 93 | NB | NB |
| T_{Vicat} (°C) | 140 | 140 | 140 | 132 | 132 | 121 | 130 | 121 | 129 | 118 | 126 | 128 |
| HDT (°C) | 118 | 117 | 117 | 107 | 106 | 103 | 104 | 100 | 106 | 97 | 102 | 103 |
| Gate streak rank | 6 | 4 | 5 | 5 | 5.5 | 3 | 3 | 4.5 | 5 | 5 | 3 | 3.5 |

| | | | | | | | | | | | | |
|---|---|---|---|---|---|---|---|---|---|---|---|---|
| . "NB" means "not break". | | | | | | | | | | | | |

### Invention Examples (IE) 1-9 and Comparative Examples (CE) 25-28

Similarly, the materials listed in Table 3 were compounded, the properties of the compositions obtained were tested and the results were summarized in Table 3.

It can be seen from Table 3 that compositions of invention examples 1-9 according to the present invention can be used to prepare molded parts having a good combination of impact strength, heat resistance, and aesthetic appearance.

Composition of comparative example 25 comprising 17.5 wt.% of wollastonite-1 will result in a molded parts with a gate streak rank of 3.5, which is not desired.

Composition of comparative example 26 comprising 6 wt.% of BDP will result in a molded parts with a gate streak rank of 4, which is not desired.

Composition of comparative example 27 comprising 17.5 wt.% of wollastonite-2 will result in a molded parts with a gate streak rank of 4, which is not desired.

Composition of comparative example 28 comprising 7 wt.% of styrene-acrylonitrile-methylmethacrylate will result in a molded parts with a gate streak rank of 6, which is not desired.

**Table 3**

| | IE1 | IE2 | IE3 | IE4 | IE5 | IE6 | IE7 | IE8 | IE9 | CE25 | CE26 | CE27 | CE28 |
|---|---|---|---|---|---|---|---|---|---|---|---|---|---|
| PC-2 | | 5.15 | 5.15 | | | 4.15 | 4.15 | 4.15 | 4.15 | | | | |
| PC-3 | 65.65 | 49 | 60.5 | 54.15 | 65.65 | 55 | 52.5 | 52 | 49.5 | 63.15 | 46 | 65.65 | 52 |
| ABS | 11.5 | 23 | 11.5 | 23 | 11.5 | 23 | 23 | 23 | 23 | 11.5 | 11.5 | 11.5 | 11.5 |
| Wollastonite-1 | 15 | 15 | 15 | 15 | | 10 | 12.5 | 10 | 12.5 | 17.5 | | | |
| Wollastonite-2 | | | | | 15 | | | | | | | 17.5 | 15 |
| BDP | 3 | 3 | 3 | 3 | 3 | 3 | 3 | 3 | 3 | 3 | 6 | 3 | 2 |
| SAN-GMA | 3 | 3 | | | 3 | 3 | 3 | 6 | 6 | 3 | 3 | 3 | |
| SAN-MMA | | | 3 | 3 | | | | | | | | | 7 |
| PETS | 0.6 | 0.6 | 0.6 | 0.6 | 0.6 | 0.6 | 0.6 | 0.6 | 0.6 | 0.6 | 0.6 | 0.6 | 0.6 |
| Irganox^{®} B900 | 0.1 | 0.1 | 0.1 | 0.1 | 0.1 | 0.1 | 0.1 | 0.1 | 0.1 | 0.1 | 0.1 | 0.1 | 0.1 |
| Carbon black | 0.75 | 0.75 | 0.75 | 0.75 | 0.75 | 0.75 | 0.75 | 0.75 | 0.75 | 0.75 | 0.75 | 0.75 | 0.75 |
| Acid-modified polyethylene wax | 0.4 | 0.4 | 0.4 | 0.4 | 0.4 | 0.4 | 0.4 | 0.4 | 0.4 | 0.4 | 0.4 | 0.4 | 0.4 |

| Testing items | | | | | | | | | | | | | |
|---|---|---|---|---|---|---|---|---|---|---|---|---|---|
| MVR(cm³/10 min) | 17.2 | 20.6 | 26.2 | 28.9 | 19.9 | 21.2 | 21.7 | 19.6 | 16.9 | 15.4 | 26.2 | 16.7 | 21.1 |
| Izod notched impact strength (kJ/m²) | 8.7 | 11 | 9 | 12 | 8 | 13 | 12 | 12 | 12 | 12.5 | 19.2 | 14.2 | 25.2 |
| Izod unnotched impact strength (kJ/m²) | 140 | 110 | 160 | 130 | 140 | 170 | 130 | 120 | 110 | 120 | 94 | 130 | 140 |
| T_{Vicat} (°C) | 125 | 119 | 126 | 118 | 125 | 119 | 119 | 117 | 116 | 126 | 110 | 126 | 119 |
| HDT (°C) | - | - | - | - | - | 98 | 98 | 97 | 97 | 103 | 90 | 102 | 101 |
| Gate streak rank | 0 | 2 | 0 | 2 | 2 | 2 | 2 | 1.5 | 2 | 3.5 | 4 | 4 | 6 |

## Claims

1. A polycarbonate composition comprising the following components, relative to the total weight of the composition:
A) 40-85 wt.% of an aromatic polycarbonate,
B) 1-30 wt.% of acrylonitrile-butadiene-styrene,
C) 8-15 wt.% of wollastonite,
D) 1-3.5 wt.% of bisphenol-A bis(diphenyl phosphate), and
E) 2.5-6 wt.% of styrene-acrylonitrile-methacrylate.

2. Composition according to claim 1, wherein acrylonitrile-butadiene-styrene comprises 5 wt.% to 95 wt.%, preferably 8 wt.% to 90 wt.%, in particular 20 wt.% to 85 wt.% of units derived from acrylonitrile and styrene, and 95 wt.% to 5 wt.%, preferably 92 wt.% to 10 wt.%, in particular 80 wt.% to 15 wt.% of units derived from butadiene, based on the weight of acrylonitrile-butadiene-styrene.

3. Composition according to claim 2, wherein acrylonitrile-butadiene-styrene comprises 15 wt.% to 35 wt.%, of units derived from acrylonitrile, 40 wt.% to 60 wt.% of units derived from styrene, and 5 wt.% to 30 wt.% of units derived butadiene, based on the weight of acrylonitrile-butadiene-styrene.

4. Composition according to any of claims 1 to 3, wherein the wollastonite is in the form of needle-shaped particles.

5. Composition according to claim 4, wherein the wollastonite has a particle size (d₅₀) of 3 µm to 50 µm.

6. Composition according to any of claims 4 or 5, wherein the wollastonite has an acicular morphology with an aspect ratio (L:D) in the range of 3:1 to 15:1, preferably 4:1 to 15:1, more preferably 5:1 to 10:1.

7. Composition according to any of claims 1 to 6, wherein methacrylate in styrene-acrylonitrile-methacrylate is selected from methylmethacrylate, glycidyl methacrylate, ethyl methacrylate, n-butyl methacrylate, benzyl methacrylate, lauryl methacrylate, stearyl methacrylate, cyclopentyl methacrylate, cyclohexyl methacrylate, benzyl methacrylate, and a combination thereof.

8. Composition according to any of claims 1 to 7, wherein styrene-acrylonitrile-methacrylate comprises 50 wt.% to 95 wt.%, of units derived from styrene, 4 wt.% to 45 wt.% of units derived from acrylonitrile, and 1 wt.% to 5 wt.% of units derived methacrylate, based on the weight of styrene-acrylonitrile-methacrylate.

9. Composition according to any of Claims 1 to 8, comprising, relative to the total weight of the composition:
A) 50-75 wt.% of an aromatic polycarbonate,
B) 3-26 wt.% of acrylonitrile-butadiene-styrene,
C) 10-15 wt.% of wollastonite with an aspect ratio (L:D) in the range of 5:1 to 15:1,
D) 2-3 wt.% of bisphenol-A bis(diphenyl phosphate), and
E) 3-4 wt.% of styrene-acrylonitrile-methacrylate.

10. Composition according to any of claims 1 to 9, wherein the total amount of components A)-E) as defined above is from 90 wt.% to 100 wt.%, preferably from 95 wt.% to 100 wt.%, more preferably from 97 wt.% to 100 wt.%, based on the total weight of the polycarbonate composition according to the present invention.

11. Composition according to any of claims 1 to 10, further comprising, up to 5 wt.%, preferably up to 3 wt.%, more preferably from 0.1 wt.% to 3 wt.%, based on the total weight of composition, an additional component selected from the group consisting of antioxidants, heat stabilizers, demoulding agents, antistatic agents, pigments, pH adjusters, and lubricants.

12. A shaped article made from the composition according to any of claims 1 to 11.

13. The shaped article according to claim 12, selected from films; profiles; housing parts for domestic appliances sheets; tubes; windows, doors and other profiles for the building sector; and exterior parts or interior parts for commercial vehicles.
